# EUROPÄISCHE PATENTSCHRIFT

(11) **EP 1 445 594 B1**
(45) Veröffentlichungstag und Bekanntmachung des Hinweises auf die Patenterteilung: **06.09.2006**
(21) Anmeldenummer: 03027154.8
(22) Anmeldetag: 26.11.2003
(51) Int. Cl.: G01K 7/02, G01K 15/00

(54) **Temperaturüberwachungseinrichtung**
Temperature monitoring device
Dispositif pour surveiller la température

(30) Priorität: 04.02.2003 DE 10304573
(43) Veröffentlichungstag der Anmeldung: 11.08.2004
(73) Patentinhaber: Honeywell Technologies Sarl, 1110 Morges (CH)
(72) Erfinder: Lifart, Bruno, 8157 Dielsdorf (CH)
(74) Vertreter: TBK-Patent

(56) Entgegenhaltungen:
- DD-A- 218 174
- DD-A- 218 175
- DE-A- 3 006 669
- JP-A- 5 340 825
- US-A- 3 755 688
- DATABASE WPI Section Ch, Week 199146 Derwent Publications Ltd., London, GB; Class L02, AN 1991-334561 XP002283005 & ES 2 021 174 A (CONSEJO SUPERIOR INVESTIGACION) 16. Oktober 1991 (1991-10-16)

## Beschreibung

Die Erfindung bezieht sich auf eine Temperaturüberwachungseinrichtung mit einem Thermoelement, die sich beispielsweise als Flammenüberwachungseinrichtung in einem Gas- oder Ölverdampfersystem einsetzen lässt. Die Temperaturüberwachungseinrichtung kann bei Reaktionen bzw. Verbrennungen ohne sichtbare Flamme die Reaktionstemperatur überwachen.

Bei einer Temperaturüberwachung in einem solchen System kommt es insbesondere auf die Zuverlässigkeit der Temperaturüberwachungseinrichtung an. Die hierbei verwendeten Thermoelemente haben jedoch nur eine begrenzte Lebensdauer. Zur Überwachung der Funktionsfähigkeit des Thermoelementes wird daher in der DE 199 34 489 C2 vorgeschlagen, während einer Messtaktpause das Thermoelement mit einem Prüfstrom zu beaufschlagen, um festzustellen, ob dieses eine Unterbrechung aufweist.

Nach einem ähnlichen Prinzip arbeitet die in der DE 30 06 669 A1 vorgeschlagene Messanordnung. Dort wird versucht, eine Beeinträchtigung des Thermoelementes durch eine Messung des elektrischen Gleich- oder Wechselstromwiderstands des Thermoelementes festzustellen. Der hierbei ermittelte aktuelle Gleich- oder Wechselstromwiderstand des Thermoelementes wird daraufhin zur Korrektur des Messwertes des Thermoelementes verwendet.

Der Erfindung liegt die Aufgabe zugrunde, eine Temperaturüberwachungseinrichtung mit erhöhter Zuverlässigkeit anzugeben.

Diese Aufgabe wird durch eine Temperaturüberwachungseinrichtung mit den Merkmalen des Patentanspruchs 1 gelöst.

Vorteilhafte Weiterbildungen der Erfindung sind Gegenstand der Unteransprüche.

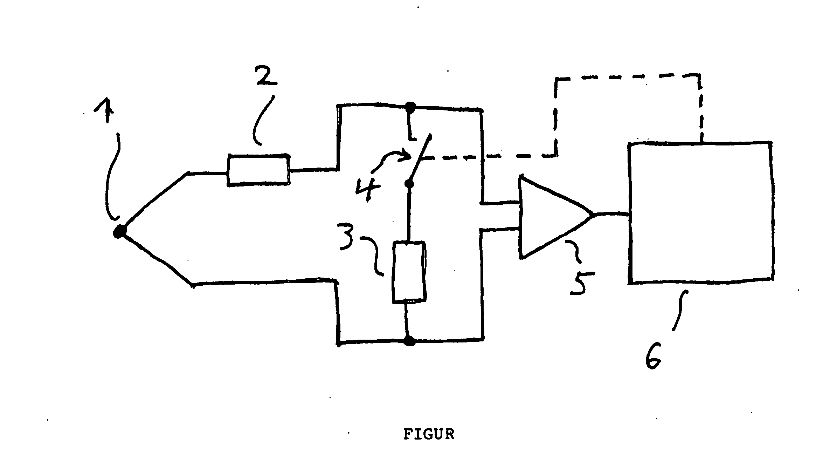

Nachfolgend wird die Erfindung anhand eines in der Figur gezeigten Ausführungsbeispiels näher beschrieben.

In der Figur ist mit 1 ein Thermoelement, mit 2 dessen Innenwiderstand, mit 3 ein Widerstandselement, mit 4 ein Schaltelement, mit 5 ein Verstärker und mit 6 eine Überwachungseinrichtung bezeichnet.

Bei dem Thermoelement 1 handelt es sich um ein Element zur Erfassung einer Temperatur auf der Grundlage des thermoelektrischen Effektes, dass eine zur erfassten Temperatur proportionale Spannung abgibt. Der Innenwiderstand R2 ist der Innenwiederstand des Thermoelementes 1, d.h. dieser Spannungsquelle. Er ist daher nicht separat vorzusehen, sondern lediglich ein ideeller Widerstand, der sich jedoch im Betrieb des Thermoelementes bemerkbar macht und dessen Größe beispielsweise rechnerisch bestimmt werden kann.

Dagegen handelt es sich bei dem Widerstandselement 3 um einen gegenständlichen Widerstand. Der Wert des Widerstandselementes 3 könnte so gewählt werden, dass er in etwa dem zu erwartenden Innenwiderstand 2 des Thermoelementes 1 entspricht.

Das Schaltelement 4 wird von der Überwachungseinrichtung 6 gesteuert. Das Schaltelement 4 kann durch einen mechanischen Kontakt oder aber auch durch einen Halbleiterschalter realisiert werden.

Der Verstärker 5 ist in der Figur nur schematisch gezeigt. Er kann beispielsweise durch einen Operationsverstärker gebildet sein. Dieser ist so zu beschalten, dass er einen hohen Eingangswiderstand von einigen MΩ aufweist. Der Verstärkungsfaktor des Verstärkers 5 sollte entsprechend dem verwendeten Thermoelement zwischen einigen hundert und einigen tausend liegen.

Die Überwachungseinrichtung 6 kann beispielsweise durch einen Mikroprozessor gebildet werden. Auch ein Aufbau der Überwachungseinrichtung 6 mit Einzelschaltelementen wie Logikgattern, Sample and Hold-Gliedern, Speichereinrichtungen usw. ist möglich. Alternativ hierzu können die Aufgaben der Überwachungseinrichtung auch von der Steuereinrichtung des Gerätes übernommen werden, in dem die Temperaturüberwachungseinrichtung eingesetzt wird. Hierbei kann es sich beispielsweise um die Überwachungseinrichtung eines Feuerungsautomate handeln. Auch eine externe Steuerung durch einen Feuerungsmanager eines übergeordneten Systems ist möglich.

Wie in der Figur gezeigt, umfasst das gezeigte Ausführungsbeispiel der Temperaturüberwachungseinrichtung ein Thermoelement 1, das ein einer zu überwachenden Temperatur entsprechendes Ausgangssignal abgibt, ein Widerstandselement 3, das dem Thermoelement 1 zuschaltbar ist und eine Überwachungseinrichtung 6, die auf der Grundlage der Ausgangssignale des Thermoelementes 1 mit und ohne zugeschaltetem Widerstandselement 3 den Innenwiederstand 2 des Thermoelementes 1 ermittelt.

Bereits durch die Vorsehung dieser Merkmale ist die Temperaturüberwachungseinrichtung zur zuverlässigen Ermittlung einer zu überwachenden Temperatur in der Lage. Die Ermittlung des Innenwiderstandes des Thermoelementes erlaubt eine zuverlässige Beurteilung des Zustandes des Thermoelementes und der Genauigkeit der Messung. Somit kann das Thermoelement, lange bevor es tatsächlich ausfällt, aber sofort nachdem eine zuverlässige Messung nicht mehr sichergestellt ist, ausgetauscht werden.

Die Zuverlässigkeit der Temperaturüberwachungseinrichtung wird darüber hinaus auch durch die geringe Anzahl von erforderlichen Bauteilen noch weiter erhöht.

Von besonderer Bedeutung ist hierbei desweiteren die Fehlersicherheit der Temperaturüberwachungseinrichtung nach oben und unten.

Bei Einsatz in einer Verbrennungsanlage dient die Temperaturüberwachungseinrichtung zum, sicherstellen, dass kein Verbrennungsprozess unter und über einer bestimmten Temperatur stattfindet. Fehlersicherheit bedeutet nun in diesem Zusammenhang, dass durch die Konstruktion der Temperaturüberwachungseinrichtung sichergestellt wird, dass bei Auftreten eines Fehler weder die obere noch die untere Temperaturgrenze unter- bzw. überschritten wird.

Bei der beanspruchten Temperaturüberwachungseinrichtung wird die Fehlersicherheit nach unten dadurch erreicht, dass ein Thermoelement verwendet wird. Bei Alterung des Thermoelementes neigt das Thermoelement dazu, ein Ausgangssignal abzugeben, das einer niedrigeren Temperatur entspricht. Der Fehler tritt also hier in der Gestalt auf, dass das Erreichen der Temperaturgrenze nach unten zu früh gemeldet wird und somit noch im sicheren Bereich abgeschaltet werden kann.

Die Fehlersicherheit nach oben wird dadurch erreicht, dass die Temperaturüberwachungseinrichtung gleichzeitig auch noch den Innenwiderstand des Thermoelementes ermittelt. Hierdurch kann sicher ausgeschlossen werden, dass ein durch die Alterung des Thermoelementes verfälschtes Ausgangssignal unbemerkt bleibt, das anderenfalls zu einer Überschreitung des oberen Grenzwertes des zu erfassenden Temperaturbereiches führen würde.

Die Temperaturüberwachungseinrichtung umfasst vorteilhafterweise ein Schaltelement 4 zum Zuschalten des Widerstandselementes. Das Schaltelement ist elektronisch ansteuerbar und kann beispielsweise von der Überwachungseinrichtung gesteuert werden. Wie oben ausgeführt, kann es sich hierbei um einen Relaiskontakt aber auch um einen Halbleiterschalter wie beispielsweise einen Transistor handeln.

Das Schaltelement 4 ist vorteilhafterweise verhältnismäßig niederohmig, so dass das Messergebnis nicht beeinträchtigt wird. Alternativ hierzu kann die Kombination aus dem Widerstandselement 3 und dem Schaltelement 4 auch durch ein Schaltelement ersetzt werden, dass auch im geschlossenen Zustand über einen gewissen Innenwiderstand verfügt.

In der Figur ist eine Reihenschaltung aus dem Widerstandselement 3 und dem Schaltelement 4 gezeigt, die zu dem Thermoelement parallel geschaltet ist. Bei der Ermittlung der zu überwachenden Temperatur ist das Schaltelement 4 geöffnet, um den Messvorgang nicht zu beeinträchtigen. Das Schaltelement 4 wird nur zum Ermitteln des Innenwiderstandes 2 kurzzeitig geschlossen.

Alternativ hierzu kann auch eine Parallelschaltung aus einem Widerstandselement und einem Schaltelement vorgesehen sein, die dann in Reihe zu dem Thermoelement zu schalten wäre. In diesem Fall ist bei der Ermittlung der zu überwachenden Temperatur das Schaltelement 4 geschlossen und wird nur zur Ermittlung des Innenwiderstandes 2 kurzzeitig geöffnet.

In jedem Fall ermittelt die Überwachungseinrichtung 6 ein erstes Ausgangssignal ohne zugeschaltetem Widerstandselement 3 und ein zweites Ausgangssignal mit zugeschaltetem Widerstandselement 3. Auf der Grundlage des Verhältnisses zwischen dem ersten und dem zweiten Ausgangssignal ermittelt die Überwachungseinrichtung 6 dann den Innenwiderstand 2 des Thermoelements 1.

Diese Ermittlung kann beispielsweise eine tatsächliche Ermittlung der Größe des Widerstandes in Ω umfassen. Grundsätzlich kann aber auch bereits das Verhältnis zwischen dem ersten und zweiten Ausgangssignal an sich als Maß für den Innenwiderstand verwendet werden. Der ermittelte Wert für den Innenwiderstand 2 des Thermoelements 1 wird dann mit einem vorbestimmten Grenzwert verglichen. Dieser Grenzwert ist der Grenzwert, ab dem das Thermoelement nicht mehr zuverlässig arbeiten kann. Dieser Grenzwert kann entweder auf Angaben des Herstellers des Thermoelementes oder auf empirischen Versuchen beruhen. Bei Überschreiten dieses Grenzwertes wird in jedem Fall eine Fehlermeldung ausgegeben, die anzeigt, dass das Thermoelement auszuwechseln ist bzw. dass die ermittelte Temperatur nicht zuverlässig der zu überwachenden Temperatur entspricht.

Die Überwachungseinrichtung kann schließlich noch eine Speichereinrichtung umfassen. In diesem Fall kann sie in die Speichereinrichtung aufeinanderfolgend ermittelte Werte für den Innenwiderstand abspeichern. Auf der Grundlage einer Mehrzahl dieser Werte kann sie dann den weiteren Verlauf der Entwicklung des Innenwiderstandes abschätzen. Gleichzeitig kann sie durch geeignete Algorithmen feststellen, mit welcher Wahrscheinlichkeit die interpolierte Entwicklung vorhergesagt werden kann und bei Vorliegen einer vorgegebenen Wahrscheinlichkeit ein entsprechendes Ausgangssignal als Warnsignal abgeben.

Alternativ zur Ermittlung eines Voraussagewertes bezüglich des Ausfalls des Thermoelementes kann auch eine Plausibilitätskontrolle der nachfolgenden Messungen auf der Grundlage der gespeicherten Innenwiderstände durchgeführt werden. Ergibt z.B. eine nachfolgende Messung, dass der Innenwiderstand des Thermoelementes gesunken sein soll, ist das Ergebnis dieser Messung gegebenenfalls als unbrauchbar zu bewerten.

Vorgeschlagen wird eine Temperaturüberwachungseinrichtung mit einem Thermoelement 1, das ein einer zu überwachenden Temperatur entsprechendes Ausgangssignal abgibt, einem Widerstandselement 3, das dem Thermoelement zuschaltbar ist und einer Überwachungseinrichtung 6, die auf der Grundlage der Ausgangssignale des Thermoelementes mit und ohne zugeschaltetem Widerstandselement den Innenwiderstand 2 des Thermoelementes ermittelt.

## Patentansprüche

1. Temperaturüberwachungseinrichtung mit
einem Thermoelement (1), das ein einer zu überwachenden Temperatur entsprechendes Ausgangssignal abgibt,
einem Widerstandeselement (3) das dem Thermoelement zuschaltbar ist, und
einer Überwachungseinrichtung (6), die auf der Grundlage der Ausgangssignale des Thermoelementes mit und ohne zugeschaltetem Widerstandeselement den Innenwiederstand (2) des Thermoelementes ermittelt.

2. Temperaturüberwachungseinrichtung nach Anspruch 1 mit einem Schaltelement (4) zum Zuschalten des Widerstandselementes.

3. Temperaturüberwachungseinrichtung nach Anspruch 2, wobei das Schaltelement von der Überwachungseinrichtung gesteuert wird.

4. Temperaturüberwachungseinrichtung nach Anspruch 2, wobei eine Reihenschaltung aus dem Widerstandselement und dem Schaltelement zu dem Thermoelement parallel geschaltet ist.

5. Temperaturüberwachungseinrichtung nach Anspruch 2, wobei eine Parallelschaltung aus dem Widerstandeselement und dem Schaltelement zu dem Thermoelement in Reihe geschaltet ist.

6. Temperaturüberwachungseinrichtung nach Anspruch 1, wobei der Überwachungseinrichtung ein Verstärker (5) vorgeschaltete ist.

7. Temperaturüberwachungseinrichtung nach Anspruch 1, wobei die Überwachungseinrichtung ein erstes Ausgangssignal ohne zugeschaltetem Widerstandselement und ein zweites Ausgangssignal mit zugeschaltetem Widerstandselement ermittelt.

8. Temperaturüberwachungseinrichtung nach Anspruch 7, wobei die Überwachungseinrichtung den Innenwiderstand des Thermoelementes auf der Grundlage des Verhältnisses zwischen dem ersten und dem zweiten Ausgangssignal ermittelt.

9. Temperaturüberwachungseinrichtung nach Anspruch 7, wobei die Überwachungseinrichtung die zu überwachende Temperatur auf der Grundlage des ersten Ausgangssignals ermittelt.

10. Temperaturüberwachungseinrichtung nach Anspruch 1, wobei die Überwachungseinrichtung eine Fehlermeldung ausgibt, wenn der ermittelte Innenwiderstand einen vorbestimmten Grenzwert überschreitet.

11. Temperaturüberwachungseinrichtung nach Anspruch 1, wobei die Überwachungseinrichtung aufeinanderfolgend ermittelte Innenwiderstände speichert und auf deren Grundlage einen Voraussagewert errechnet oder eine Plausibilitätskontrolle der nachfolgenden Messungen durchführt.

12. Verdampfungssystem mit einer Temperaturüberwachungseinrichtung nach einem der vorherigen Ansprüche.

## Claims

1. Temperature monitoring device with
a thermocouple (1) which emits an output signal corresponding to a monitored temperature,
a resistance element (3) connectable by a switch to the thermocouple, and
a monitoring device (6) which on the basis of the output signals of the thermocouple determines the internal resistance (2) of the thermocouple with and without the resistance element connected.

2. Temperature monitoring device according to Claim 1 with a switch element (4) for connecting the resistance element.

3. Temperature monitoring device according to Claim 2 wherein the switch element is controlled by the monitoring device.

4. Temperature monitoring device according to Claim 2 wherein a series connection of the resistance element and switch element is connected in parallel with the thermocouple.

5. Temperature monitoring device according to Claim 2 wherein a parallel connection of the resistance element and switch element is connected in series to the thermocouple.

6. Temperature monitoring device according to Claim 1 wherein the monitoring device is preceded by an amplifier (5).

7. Temperature monitoring device according to Claim 1 wherein the monitoring device detects a first output signal with resistance element disconnected and a second output signal with resistance element connected.

8. Temperature monitoring device according to Claim 7 wherein the monitoring device determines the internal resistance of the thermocouple on the basis of the ratio between the first and second output signals.

9. Temperature monitoring device according to Claim 7 wherein the monitoring device determines the monitored temperature on the basis of the first output signal.

10. Temperature monitoring device according to Claim 1 wherein the monitoring device outputs a fault signal when the determined internal resistance exceeds a predetermined limit value.

11. Temperature monitoring device according to Claim 1 wherein the monitoring device stores successively determined internal resistances and on the basis of these, computes a prediction value or conducts a plausibility check on ensuing measurements.

12. Vaporizing system with a temperature monitoring device according to any one of the preceding claims.

## Revendications

1. Dispositif de surveillance de température avec
un thermocouple (1) qui émet un signal de sortie correspondant à une température à surveiller,
un élément de résistance (3) qui est apte à être connecté au thermocouple, et
un dispositif de surveillance (6) qui détermine la résistance intérieure (2) du thermocouple à partir des signaux de sortie de celui-ci avec et sans élément de résistance connecté.

2. Dispositif de surveillance de température selon la revendication 1, avec un élément de commutation (4) pour connecter l'élément de résistance.

3. Dispositif de surveillance de température selon la revendication 2, dans lequel l'élément de commutation est commandé par le dispositif de surveillance.

4. Dispositif de surveillance de température selon la revendication 2, dans lequel un montage en série composé de l'élément de résistance et de l'élément de commutation est monté en parallèle par rapport au thermocouple.

5. Dispositif de surveillance de température selon la revendication 2, dans lequel un montage parallèle composé de l'élément de résistance et de l'élément de commutation est monté en série par rapport au thermocouple.

6. Dispositif de surveillance de température selon la revendication 1, dans lequel un amplificateur (5) est monté en amont du dispositif de surveillance.

7. Dispositif de surveillance de température selon la revendication 1, dans lequel le dispositif de surveillance détermine un premier signal de sortie sans élément de résistance connecté, et un second signal de sortie avec l'élément de résistance connecté.

8. Dispositif de surveillance de température selon la revendication 7, dans lequel le dispositif de surveillance détermine la résistance intérieure du thermocouple sur la base du rapport entre le premier et le second signal de sortie.

9. Dispositif de surveillance de température selon la revendication 7, dans lequel le dispositif de surveillance détermine la température à surveiller sur la base du premier signal de sortie.

10. Dispositif de surveillance de température selon la revendication 1, dans lequel le dispositif de surveillance émet un message d'erreur si la résistance intérieure déterminée dépasse une valeur limite prédéfinie.

11. Dispositif de surveillance de température selon la revendication 1, dans lequel le dispositif de surveillance mémorise des résistances intérieures déterminées successivement et, sur cette base, calcule une valeur de prévision ou effectue un contrôle de plausibilité des mesures suivantes.

12. Système d'évaporation avec un dispositif de surveillance de température selon l'une des revendications précédentes.
